Europäisches Patentamt

European Patent Office

Office européen des brevets

(11) Numéro de publication : **0 630 137 A1**

(12) **DEMANDE DE BREVET EUROPEEN**

(21) Numéro de dépôt : **94401355.6**

(22) Date de dépôt : **16.06.94**

(51) Int. Cl.⁵ : **H04L 27/38, H04L 7/02**

(30) Priorité : **17.06.93 FR 9307314**

(43) Date de publication de la demande :
**21.12.94 Bulletin 94/51**

(84) Etats contractants désignés :
**DE ES FR GB IT NL SE**

(71) Demandeur : **ALCATEL TELSPACE**
**5, rue Noel Pons**
**F-92734 Nanterre Cédex (FR)**

(72) Inventeur : **Isard, Marc**
**33, Rue Schnapper**
**F-78150 St Germain en Laye (FR)**
Inventeur : **Bernier, Thierry**
**12, Sente des Carrières**
**F-78780 Maurecourt (FR)**

(74) Mandataire : **Schaub, Bernard et al**
**c/o SOSPI**
**14-16 rue de la Baume**
**F-75008 Paris (FR)**

(54) **Système de réception d'un signal numérique à modulation de phase et d'amplitude.**

㊼ L'invention concerne un système de réception d'un signal numérique à pluralité de phases mettant en oeuvre un égaliseur temporel commandé par un estimateur lui fournissant des paramètres de correction.
Ce système comporte :
— au moins un asservissement périphérique dont l'estimateur utilise pour son fonctionnement au moins un de ces paramètres de correction, l'asservissement périphérique ayant une plage de fonctionnement disjointe de celle de l'égaliseur temporel ;
— des moyens de discrimination temporelle détectant les zones mortes de l'estimateur de chaque asservissement périphérique pour permettre un fonctionnement de l'égaliseur temporel, de manière à lever l'interaction entre l'égaliseur temporel et l'asservissement périphérique.
L'asservissement périphérique peut notamment être constitué par un estimateur de pointage de type Mueller et Müller et/ou par un dispositif de récupération de porteuse de type Leclert et Vandamme.

EP 0 630 137 A1

Le domaine de l'invention est celui des systèmes de réception de signaux numériques à modulation complexe (phase et amplitude) mettant en oeuvre un égaliseur temporel. L'invention s'applique par exemple aux récepteurs de signaux modulés MDP-M ou alors aux récepteurs de type MAQ-M utilisés dans des systèmes de radiocommunication numériques, où M vaut 4, 8, 16 ou plus.

De tels systèmes de réception sont notamment décrits dans "Digital Communications" de John G. PROAKIS, McGraw-Hill ™.

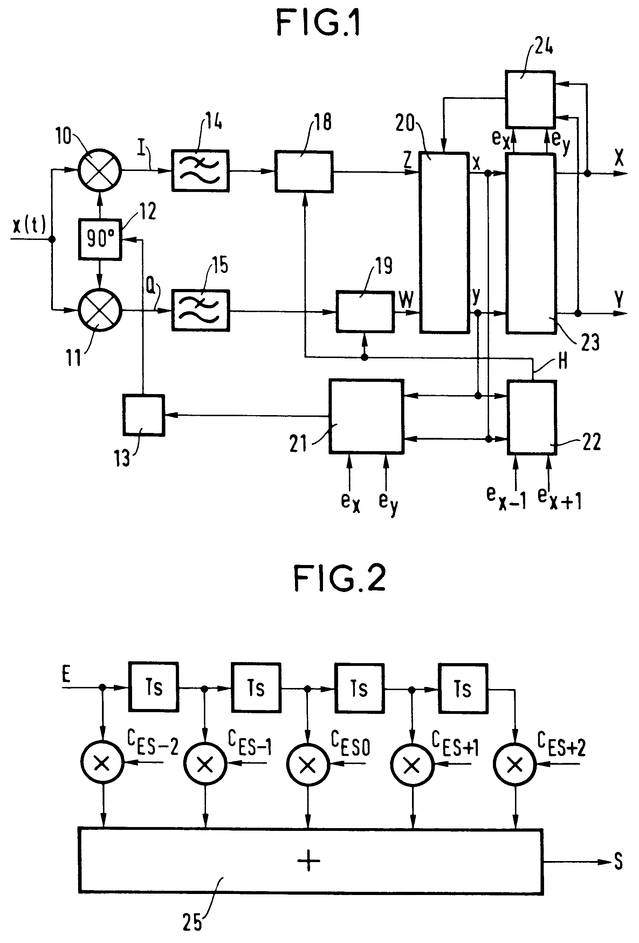

La figure 1 représente une partie d'un système de réception d'un signal à pluralité de phases. Un signal reçu x(t), en fréquence intermédiaire ou en bande de base, est appliqué à chaque première entrée de deux mélangeurs 10, 11 dont les secondes entrées reçoivent des signaux d'oscillateur local en quadrature. Ces signaux proviennent d'un déphaseur 12 de 90° recevant un signal sinusoidal d'un oscillateur local 13. Les signaux de sortie des mélangeurs 10, 11 constituent deux voies en quadrature I et Q et sont appliqués à des filtres passe-bas 14, 15 suivis de convertisseurs analogiques-numériques 18, 19 fournissant des échantillons Z, W des signaux en quadrature. Ces échantillons Z et W sont appliqués à un jeu 20 de filtres auto-adaptatifs recevant des paramètres de correction d'un dispositif 24 de calcul. Le jeu de filtres 20 et le dispositif 24 forment un égaliseur temporel. Le jeu de filtres 20 comporte quatre branches de filtres transverses et est suivi d'un régénérateur 23 de signaux fournissant des signaux X et Y régénérés.

La fonction d'un égaliseur temporel 20, 24 est de corriger tout type de distorsion linéaire et donc de réduire l'influence des distorsions résiduelles d'amplitude ou de temps de propagation de groupe du système de transmission. Il est apte à supprimer l'interférence inter-symboles et l'évanouissement sélectif (fading) pour minimiser le taux d'erreur de la transmission.

Les signaux x et y de sortie de l'égaliseur temporel 20, 24 sont également appliqués à un dispositif 21 de récupération de porteuse, pilotant l'oscillateur local 13, et à un dispositif 22 de récupération de rythme, pilotant les convertisseurs analogique-numériques 18 et 19 pour échantillonner les signaux qu'ils reçoivent aux instants où le diagramme de l'oeil est le plus ouvert. Le dispositif 22 de récupération de rythme fournit pour cela un signal d'horloge H à ces convertisseurs.

Le régénérateur 23 fournit des signaux d'erreur $e_x$ et $e_y$ à un dispositif 24 de calcul des coefficients multiplicateurs fournis à l'égaliseur temporel 20, comme il sera vu par la suite, et également au dispositif 21 de récupération de porteuse. Les signaux régénérés X et Y sont également fournis au dispositif 24 de calcul.

La figure 2 représente une des quatre branches d'un jeu de filtres tel que 20 comportant dans cet exemple 5 coefficients. Le signal d'entrée, noté E et correspondant à Z ou W sur la figure 1, est appliqué à des lignes à retard successives retardant chaque échantillon d'une durée Ts correspondant au temps symbole. Chaque échantillon est multiplié par un coefficient $C_{ES-2}$ à $C_{ES+2}$ qui lui est fourni par le dispositif 24 de calcul des coefficients (estimateur de quadrature) et les résultats des différentes multiplications sont sommés par un sommateur 25 dont le signal de sortie S correspond à l'échantillon estimé x ou y qui est exploité pour optimiser les coefficients $C_{ES-2}$ à $C_{ES+2}$. Le coefficient $C_{ES0}$ est appelé le coefficient central du filtre.

Le régénérateur 23 convertit le signal reçu en mots d'information et quantifie la distorsion du signal reçu (x et y) par rapport au signal idéal (X et Y). A titre d'exemple, une erreur de pointage $e_0$ sur un échantillon $x_0$ se traduit:
- pour un pointage antérieur à l'instant optimal:
  * par $e_0 < 0$ si $x_0 - x_{-1} > 0$ et $x_{+1} - x_0 > 0$
  * par $e_0 > 0$ si $x_0 - x_{-1} < 0$ et $x_{+1} - x_0 < 0$
- pour un pointage postérieur à l'instant optimal:
  * par $e_0 > 0$ si $x_0 - x_{-1} > 0$ et $x_{+1} - x_0 > 0$
  * par $e_0 < 0$ si $x_0 - x_{-1} < 0$ et $x_{+1} - x_0 < 0$

avec $x_{-1}$ et $x_{+1}$ correspondant respectivement aux échantillons précédant et suivant l'échantillon $x_0$.

L'égaliseur temporel a justement pour objectif de corriger les distorsions entre les voies I et Q aux instants de prise de décision, c'est à dire à chaque temps symbole Ts, donnés par l'horloge H du dispositif 22 de récupération de rythme, en recherchant une orthogonalité entre les signaux x et y.

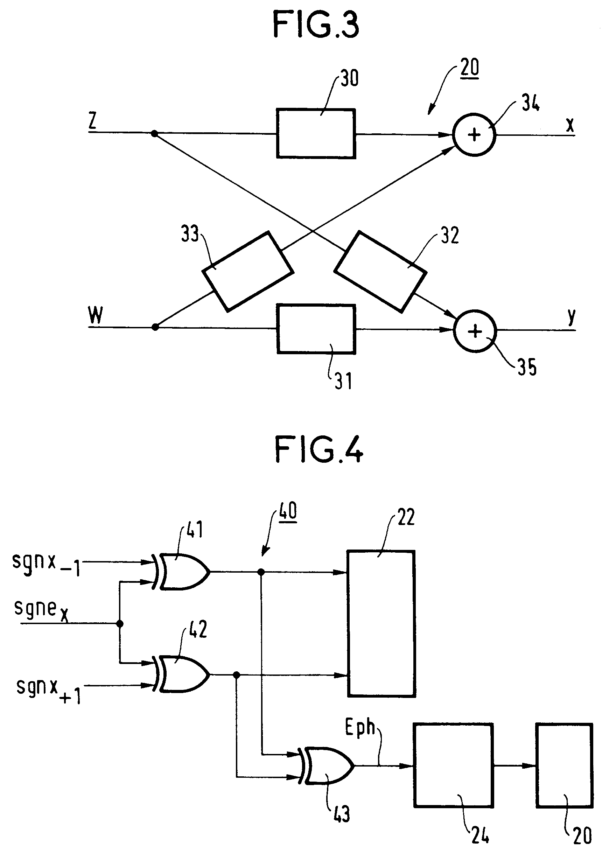

La figure 3 représente le jeu de filtres 20 de la figure 1 où chaque branche 30 à 33 peut être constituée d'un dispositif tel que représenté à la figure 2. Les signaux de sortie respectifs des branches 30, 33 et 31, 32 sont sommés en 34 et 35 pour fournir les signaux x et y.

L'orthogonalité entre x et y s'opère en calculant une matrice de corrélation entre Z et W d'une part et x et y d'autre part. Cette matrice de corrélation fait intervenir les paramètres de correction centraux $C_{Zx0}$, $C_{Wy0}$, $C_{Zy0}$, et $C_{Wx0}$ qui sont respectivement les paramètres centraux des filtres 30, 31, 32 et 33 et on a:

$$\begin{bmatrix} x_0 \\ y_0 \end{bmatrix} = \begin{bmatrix} c_{Zx0} & c_{Wx0} \\ c_{Zy0} & c_{Wy0} \end{bmatrix} \cdot \begin{bmatrix} z_0 \\ w_0 \end{bmatrix}$$

Si le pointage de l'oeil du signal n'est pas effectué au moment optimal par le dispositif 22 de récupération de rythme, c'est à dire lorsque l'oeil est le plus ouvert, les erreurs estimées $e_x$ et $e_y$ ne sont pas nulles et le dispositif 24 de calcul des coefficients va tenter d'apporter une correction en modifiant les paramètres multiplicateurs du filtre 20 pour corriger l'écart de pointage. Il y a donc une combinaison des actions de l'égaliseur temporel et du dispositif de récupération de rythme.

La récupération de rythme mise en oeuvre dans le dispositif 22 peut s'effectuer de différentes manières et une méthode robuste de synchronisation analogique consiste à effectuer une détection du passage par zéro des signaux x et y. Ce procédé intervenant en amont de l'échantillonnage des signaux en quadrature ne peut en revanche s'affranchir ni des dérives thermiques, ni du biais apporté par la déformation du signal reçu x(t) en cas de trajet multiple.

On connaît également des estimateurs basés sur la symétrie de la réponse impulsionnelle à ±Ts. Dans le cadre de cette invention, on souhaite justement utiliser un tel estimateur qui fait par exemple l'objet de l'article "Timing Recovery in Digital Synchronous Data Receivers", IEEE Transactions on Communications, vol.COM-24 n°5, mai 1976, de Kurt H. Mueller et Markus Müller.

Cependant, un tel estimateur, ci-après appelé de type Mueller et Müller, n'est pas compatible avec un égaliseur temporel car il est identique à celui utilisé par l'égaliseur temporel.

En effet, l'estimateur de l'égaliseur temporel compris dans le dispositif 24 de calcul des coefficients, modifie les coefficients premier avant phase et premier arrière phase. Ces coefficients seront par la suite notés $C_{\alpha\beta-1}$ et $C_{\alpha\beta+1}$, où $\alpha$ correspond à Z ou W et $\beta$ à x ou y, selon la branche concernée. Ces coefficients sont ceux référencés $C_{ES+1}$ et $C_{ES-1}$ sur la figure 2 pour le filtre représenté. Or, comme le montre l'article de Mueller et Müller, l'optimisation du pointage du diagramme de l'oeil revient à rechercher une symétrie entre ces coefficients premier avant phase et premier arrière phase. Pour cela, l'erreur $e_{\alpha\beta}$ suivante est par exemple calculée:

$$e_{\alpha\beta} = sgn(x_{+1}).sgn(e_x) - sgn(x_{-1}).sgn(e_x)$$

cette relation pouvant s'écrire de façon plus générale:

$$e(t) = \gamma(t + \tau) - \gamma(t - \tau)$$

avec

$$\gamma(t + \tau) = sgn(x_{t + \tau}).sgn(e_x) \text{ ou } sgn(x).sgn(ex_{t - \tau})$$

et

$$\gamma(t - \tau) = sgn(x_{t - \tau}).sgn(e_x) \text{ ou } sgn(x).sgn(ex_{t + \tau})$$

où sgn( ) correspond à la fonction signe et $\tau$ à l'instant choisi pour effectuer l'estimation. $\tau$ peut par exemple être égal à 1. Pour symétriser la réponse impulsionnelle, l'estimateur de pointage vise à annuler l'erreur $e_{\alpha\beta}$.

En conséquence, si l'on associe un égaliseur temporel à un estimateur de pointage de type Mueller et Müller, par exemple dans des boucles parallèles, on obtient une instabilité du système de réception tel que représenté à la figure 1. En effet, si l'on veut pouvoir simultanément utiliser un égaliseur temporel et un estimateur de pointage destiné à symétriser la réponse impulsionnelle, il serait nécessaire de bloquer à zéro les coefficients $C_{Zx-1}$, $C_{Zx+1}$, $C_{Wy-1}$ et $C_{Wy+1}$ de l'estimateur de pointage, ce qui a pour effet de ne pas permettre un asservissement du pointage du diagramme de l'oeil. Il s'en suit que ces deux dispositifs sont incompatibles.

Par ailleurs, le système de réception de la figure 1 met en oeuvre un dispositif 21 de récupération de la fréquence porteuse, destiné à commander l'oscillateur local 13.

On connaît des estimateurs numériques entrant dans la réalisation de tels dispositifs de récupération de porteuse. Un estimateur utilisant les coefficients centraux $C_{\alpha\beta0}$ est par exemple utilisé dans les asservissements dits de Leclert et Vandamme et décrit dans l'article "Universal Carrier Recovery Loop for QASK and PSK Signal Sets" de A. LECLERT et P. VANDAMME, IEEE TRANSACTIONS ON COMMUNICATIONS, vol. com- 31, n°1, janvier 1983, pages 130 à 136.

Dans le cadre de la présente invention, on souhaite pouvoir utiliser un estimateur de type Leclert et Vandamme pour réaliser la récupération de porteuse.

On observe cependant également une interaction entre l'estimateur de l'égaliseur temporel et celui de la récupération de porteuse lorsque ce dernier utilise les coefficients centraux $C_{\alpha\beta0}$ de l'égaliseur temporel. Il est alors nécessaire de bloquer à zéro les coefficients $C_{Zy0}$ et $C_{Wx0}$ de l'égaliseur temporel pendant le fonctionnement de l'estimateur de porteuse, ce qui a pour effet de ne pas permettre une correction d'erreur de quadrature et une distorsion inter-symboles apparaît.

La présente invention a notamment pour objectif de pallier ces inconvénients.

Plus précisément, un des objectifs de l'invention est de fournir un système de réception d'un signal numérique à modulation complexe (phase et amplitude) mettant en oeuvre un égaliseur temporel assurant une élimination d'interférence inter-symboles et au moins un asservissement périphérique utilisant au moins un des coefficients employés par l'égaliseur temporel, sans qu'il n'y ait d'interaction entre le fonctionnement de l'égaliseur temporel et cet asservissement périphérique.

Cet asservissement périphérique doit par exemple pouvoir être constitué par un estimateur de pointage de type Mueller et Müller (récupération de rythme) et/ou un dispositif de récupération de porteuse de type Leclert et Vandamme.

Cet objectif, ainsi que d'autres qui apparaîtront par la suite, est atteint grâce à un système de réception d'un signal numérique à modulation complexe mettant en oeuvre un égaliseur temporel comportant un estimateur lui fournissant des paramètres de correction, ce système comportant:

- au moins un asservissement périphérique dont l'estimateur utilise pour son fonctionnement au moins un des paramètres de correction fournis à l'égaliseur temporel, l'asservissement périphérique ayant une plage de fonctionnement disjointe de celle de l'égaliseur temporel;
- des moyens de discrimination temporelle détectant les zones mortes de l'estimateur de chaque asservissement périphérique pour permettre un fonctionnement de l'égaliseur temporel, de manière à lever l'interaction entre l'égaliseur temporel et cet asservissement périphérique.

Il est ainsi possible d'utiliser à la fois un égaliseur temporel et un ou plusieurs asservissements périphériques utilisant des estimateurs similaires à celui de l'égaliseur temporel.

Dans un mode de réalisation avantageux de l'invention, l'asservissement périphérique est constitué par un dispositif de récupération de rythme asservissant la phase d'un signal de commande d'échantillonnage appliqué à un dispositif de régénération des données numériques issues de l'égaliseur temporel, le dispositif de récupération de rythme comportant un estimateur de pointage de type Mueller et Müller.

Cet estimateur de pointage peut être du type à minimiser l'erreur donnée par:

$$e(t) \ = \ \gamma(t + \tau) \ - \ \gamma(t - \tau)$$

avec

$$\gamma(t + \tau) \ = \ sgn(x_{t + \tau}).sgn(e_x) \text{ ou } sgn(x).sgn(ex_{t - \tau})$$

et

$$\gamma(t - \tau) \ = \ sgn(x_{t - \tau}).sgn(e_x) \text{ ou } sgn(x).sgn(ex_{t + \tau})$$

où sgn( ) est la fonction signe, et dans ce cas les moyens de discrimination temporelle détectent la condition:

$$\gamma(t + \tau) \ = \ \gamma(t - \tau)$$

pour autoriser un fonctionnement de l'égaliseur temporel. $\tau$ peut par exemple être égal à 1.

Dans un autre mode de réalisation, l'asservissement périphérique est constitué par un dispositif de récupération de porteuse asservissant la fréquence d'un oscillateur local utilisé pour la démodulation du signal numérique, ce dispositif de récupération de porteuse comportant un estimateur de quadrature de type Leclert et Vandamme dont les zones mortes correspondent aux zones d'activation de l'égaliseur temporel et réciproquement.

D'autres caractéristiques et avantages de l'invention apparaîtront à la lecture de la description suivante de deux applications préférentielles, données à titre illustratif et non limitatif, et des dessins annexés dans lesquels:

- la figure 1 représente une partie d'un système de réception d'un signal numérique à pluralité de phases, ce système comportant un égaliseur temporel, un dispositif de récupération de rythme et un dispositif de récupération de porteuse;
- la figure 2 représente une branche du jeu de filtres de l'égaliseur temporel de la figure 1;
- la figure 3 représente les quatre branches du jeu de filtres de l'égaliseur temporel de la figure 1;
- la figure 4 représente un exemple de réalisation de moyens de discrimination temporelle utilisés pour rendre compatibles un égaliseur temporel et un dispositif de récupération de rythme de type Mueller et Müller;
- la figure 5 donne le signe de l'estimateur de quadrature dans le plan de récupération pour un signal à 16 états de phase (MAQ-16);
- la figure 6 donne le signe de l'estimateur de phase dans le plan de récupération pour un signal à 16 états de phase (MAQ-16);
- la figure 7 représente un mode de réalisation de moyens de discrimination temporelle pouvant être utilisés lorsqu'un égaliseur temporel et un estimateur de type Leclert et Vandamme sont utilisés dans un système de réception d'un signal à pluralité de phases.

Les figures 1 à 3 ont été décrites en référence à l'état de la technique.

La présente invention propose de rendre compatible un égaliseur temporel et un asservissement périphérique utilisant au moins un des coefficients de correction mis en oeuvre dans l'égaliseur, en effectuant une discrimination temporelle entre leurs fonctionnements. Dans la suite de cette description, l'asservissement périphérique sera constitué dans un premier temps par un dispositif de récupération de rythme fonctionnant avec un estimateur de pointage de type Mueller et Müller, et, dans un deuxième temps, par un dispositif de récupération de porteuse fonctionnant avec un estimateur de type Leclert et Vandamme.

Ces deux asservissements périphériques utilisent chacun au moins un des paramètres de correction $C_{\alpha\beta}$ utilisés par l'égaliseur temporel, mais il est possible de déterminer des plages temporelles pendant lesquelles ils n'utilisent pas ces paramètres, qui restent alors disponibles pour effectuer un asservissement de quadrature. Il va de soi que d'autres types d'asservissements périphériques peuvent être utilisés. De façon générale, tout asservissement périphérique ayant une plage de fonctionnement disjointe de celle de l'égaliseur temporel convient.

Le tableau suivant permet de comprendre le principe de discrimination temporelle mis en oeuvre dans la présente invention lorsque l'asservissement périphérique est constitué par un dispositif de récupération de porteuse de type Mueller et Müller, c'est à dire par un asservissement tendant à annuler les signaux d'erreur $e_x$ et $e_y$ pour assurer une réponse impulsionnelle symétrique.

| $e_{Zx-1}$ | 0 | 0 | 1 | 1 |
|---|---|---|---|---|
| $e_{Zx+1}$ | 0 | 1 | 0 | 1 |
| Rythme 22 | 0 | -1 | +1 | 0 |
| Egaliseur 20+24 | Actif | Inactif | Inactif | Actif |

Ce tableau montre que le dispositif 24 de calcul de l'égaliseur temporel n'est actif, c'est à dire ne modifie les coefficients $C_{\alpha\beta-1}$ et $C_{\alpha\beta+1}$, que lorsque le dispositif 22 de récupération de rythme est dans des zones mortes. Il y a donc complémentarité des zones actives et des zones mortes. Ces zones mortes correspondent également aux cas où la différence entre les erreurs considérées, ici les erreurs sur la voie Zx (voie I) avant et après l'instant courant, est nulle et donc où le dispositif de récupération de rythme n'est pas sollicité. Le même raisonnement est valable pour l'autre voie (voie Q; erreurs $e_{Wy-1}$ et $e_{Zx+1}$).

La détection de ces zones mortes permet donc de déterminer les plages temporelles pendant lesquelles l'égaliseur temporel peut être rendu actif, c'est à dire les plages temporelles pendant lesquelles les coefficients qu'il partage avec la récupération de rythme peuvent être modifiés.

A cette fin, des moyens de discrimination temporelle peuvent détecter la nullité de la différence de deux produits élémentaires de corrélation servant au calcul des coefficients de l'égaliseur:

$Eph = (x_{t+\tau}.ex_t) - (x_{t-\tau}.ex_t)$, un cas particulier étant obtenu pour $\tau=1$. Dans ce cas:

$$x_{+1}.e_x \ = \ e_{Zx+1} \text{ et } x_{-1}.e_x \ = \ e_{Zx-1}$$

où $x_{-1}$ et $x_{+1}$ sont des échantillons du signal décalés d'un temps symbole par rapport à l'estimation de distorsion $e_x$.

Il est à noter que l'estimateur Eph peut aussi être:

$$Eph \ = \ (x_t.ex_{t-\tau}) - (x_t.ex_{t+\tau})$$

L'estimateur de phase Eph est neutre lorsque cette différence est nulle, c'est à dire que la réponse impulsionnelle détectée paraît symétrique. On peut restreindre la prise en compte de ces termes élémentaires dans le contrôle de l'égaliseur temporel uniquement lorsque cette zone neutre est respectée. Les critères d'égalisation deviennent par là même orthogonaux aux critères de pointage et les domaines de validité de l'asservissement de pointage et de l'égalisation sont parfaitement disjoints, ce qui assure une stabilité et la compatibilité des deux systèmes.

Un exemple de réalisation de tels moyens de discrimination temporelle est représenté à la figure 4.

Trois portes OU-EXCLUSIF 41 à 43 constituent les moyens de discrimination temporelle 40 d'une voie considérée. L'autre voie est identique. La porte 41 reçoit les signes de $x_{-1}$ et de $e_x$ et la porte 42 les signes de $x_{+1}$ et de $e_x$. Les sorties de ces deux portes 41 et 42 sont reliées aux entrées de la porte 43 dont le signal de sortie est Eph et constitue un signal de validation de l'estimateur 24 pilotant l'égaliseur temporel 20, 24. Lorsque l'estimateur 24 reçoit ce signal Eph, il valide la modification des coefficients $C_{\alpha\beta-1}$ et $C_{\alpha\beta+1}$.

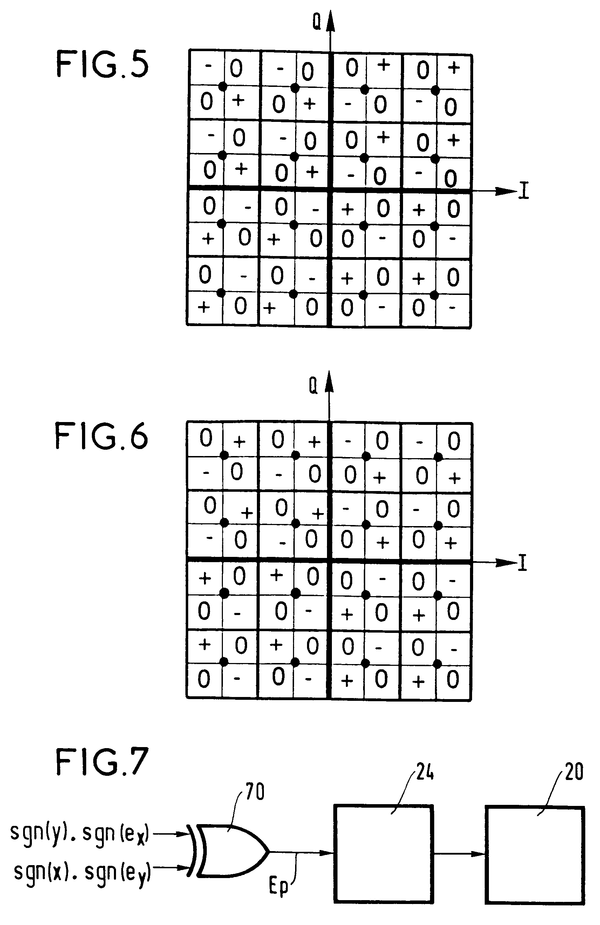

Concernant une seconde application possible de la présente invention, les figures 5 et 6 donnent respectivement le signe de l'estimateur de quadrature et de l'estimateur de porteuse pour l'asservissement de porteuse dans le plan de récupération pour un signal x(t) à 16 états de phase (MAQ-16). Le signe de l'asservissement de porteuse est donné, pour un asservissement de type Leclert et Vandamme, par l'estimateur de porteuse Ep de la relation:

$$Ep = sgn(y).sgn(e_x) - sgn(x).sgn(e_y)$$

Sur ces figures, les plages mortes, c'est à dire les états dans lesquels les asservissements ne sont pas modifiés, sont marquées 0, alors que les plages dans lesquelles les asservissements sont modifiés sont marquées - ou +. On s'aperçoit que les asservissements de porteuse et de quadrature sont orthogonaux, c'est à dire qu'ils ne sont jamais sollicités en même temps et qu'ils sont complémentaires, comme dans le cas précédent. Il est donc possible, en réalisant une détection de l'activité de l'estimateur de récupération de porteuse, d'inhiber une modification des paramètres de l'estimateur de quadrature. A cet effet, des moyens de discrimination temporelle, tels que représentés à la figure 7, peuvent être employés.

La figure 7 représente un mode de réalisation de moyens de discrimination temporelle pouvant être utilisés lorsqu'un égaliseur temporel et un estimateur de type Leclert et Vandamme sont utilisés dans un système de réception d'un signal à pluralité de phases.

Ces moyens de discrimination temporelle sont constitués d'une porte OU-EXCLUSIF 70 recevant sur ses entrées les signaux $sgn(y).sgn(e_x)$ et $sgn(x).sgn(e_y)$. Ils fournissent le signe Ep à l'estimateur de quadrature 24 pilotant l'égaliseur temporel 20, ce signe bloquant les coefficients centraux de quadrature de l'égaliseur temporel lorsque le dispositif de récupération de porteuse est actif.

Ainsi, les coefficients centraux de l'égaliseur 20 agissent seulement sur la quadrature lorsqu'ils sont actifs, c'est à dire lorsque l'estimateur de porteuse est en zone morte. On supprime ainsi l'interaction entre le dispositif de récupération de porteuse et l'asservissement de quadrature.

De manière générale, l'invention propose des moyens de discrimination temporelle détectant les zones mortes d'un asservissement périphérique pour permettre un fonctionnement de l'égaliseur temporel du système de réception, de manière à lever l'interaction entre cet égaliseur temporel et l'asservissement périphérique concerné.

L'invention s'applique à tout type d'estimateur de quadrature. De plus, plusieurs asservissements périphériques peuvent être utilisés simultanément: il est par exemple possible d'utiliser à la fois un dispositif de récupération de rythme de type Mueller et Müller et un dispositif de récupération de porteuse de type Leclert et Vandamme, en même temps qu'un égaliseur temporel.

## Revendications

1. Système de réception d'un signal numérique (x(t)) à modulation complexe mettant en oeuvre un égaliseur temporel (20,24) comportant un estimateur (24) lui fournissant des paramètres de correction ($C_{\alpha\beta}$), caractérisé en ce qu'il comporte:
    - au moins un asservissement périphérique (21,22) dont l'estimateur utilise pour son fonctionnement au moins un desdits paramètres de correction ($C_{\alpha\beta}$) fournis audit égaliseur temporel (20,24), ledit asservissement périphérique (21,22) ayant une plage de fonctionnement disjointe de celle dudit égaliseur temporel (20,24);
    - des moyens de discrimination temporelle (40,70) détectant les zones mortes de l'estimateur de chaque asservissement périphérique (21,22) pour permettre un fonctionnement dudit égaliseur temporel (20,24), de manière à lever l'interaction entre ledit égaliseur temporel (20,24) et ledit asservissement périphérique (21,22).

2. Système selon la revendication 1, caractérisé en ce que ledit asservissement périphérique est constitué par un dispositif de récupération de rythme (22) asservissant la phase d'un signal de commande d'échantillonnage (H) appliqué à un dispositif de régénération (23) desdites données numériques (x, y) issues dudit égaliseur temporel (20,24), ledit dispositif de récupération de rythme (22) comportant un estimateur de pointage de type Mueller et Müller.

3. Système selon la revendication 2, caractérisé en ce que ledit estimateur de pointage minimise l'erreur donnée par:

$$e(t) = \gamma(t + \tau) - \gamma(t - \tau)$$

avec

$$\gamma(t + \tau) = sgn(x_{t + \tau}).sgn(e_x) \text{ ou } sgn(x).sgn(ex_{t - \tau})$$

et

$$\gamma(t - \tau) = sgn(x_{t - \tau}).sgn(e_x) \text{ ou } sgn(x).sgn(ex_{t + \tau})$$

où sgn( ) est la fonction signe, et en ce que lesdits moyens de discrimination temporelle détectent la condition:

$$\gamma(t + \tau) = \gamma(t - \tau)$$

pour autoriser un fonctionnement dudit égaliseur temporel (20,24).

4. Système selon l'une des revendications 1 à 3, caractérisé en ce que ledit asservissement périphérique est constitué par un dispositif de récupération de porteuse (21) asservissant la fréquence d'un oscillateur local (13) utilisé pour la démodulation dudit signal numérique (x(t)), ledit dispositif de récupération de porteuse (21) comportant un estimateur de quadrature de type Leclert et Vandamme dont les zones mortes correspondent aux zones d'activation dudit égaliseur temporel (20,24) et réciproquement.

# FIG.1

# FIG.2

# FIG.3

# FIG.4

FIG.5

FIG.6

FIG.7

$sgn(y) . sgn(e_x)$

$sgn(x) . sgn(e_y)$

70

$E_P$

24

20

**Office européen des brevets**

# RAPPORT DE RECHERCHE EUROPEENNE

Numero de la demande

EP 94 40 1355

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | EP-A-0 262 644 (NEC)<br>* abrégé; figures 3,7,11 *<br>* colonne 4, ligne 14 - ligne 56 *<br>--- | 1-4 | H04L27/38<br>H04L7/02 |
| X | IEEE TRANSACTIONS ON SIGNAL PROCESSING, vol.40, no.6, Juin 1992, NEW YORK US pages 1383 - 1397<br>JABLON 'Joint blind equalization, carrier recovery, and timing recovery for high-order QAM signal constellations'<br>* page 1386, colonne de gauche, alinéa 2 *<br>* page 1386, colonne de droite, alinéa 3 *<br>* page 1388, colonne de gauche, alinéa 2 * | 1 | |
| A | | 2-4 | |
| | --- | | |
| A,D | IEEE TRANSACTIONS ON COMMUNICATIONS, vol.24, no.5, 1976, NEW YORK US pages 516 - 531<br>MUELLER & MÜLLER 'Timing recovery in digital synchronous data receivers'<br>* abrégé; figures 3,7 *<br>----- | 2 | |

**DOMAINES TECHNIQUES RECHERCHES (Int.Cl.5)**

H04L

Le présent rapport a été établi pour toutes les revendications

| Lieu de la recherche | Date d'achèvement de la recherche | Examinateur |
|---|---|---|
| LA HAYE | 7 Octobre 1994 | Scriven, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)